# EUROPÄISCHE PATENTSCHRIFT

(11) **EP 3 223 420 B1**
(45) Veröffentlichungstag und Bekanntmachung des Hinweises auf die Patenterteilung: **06.05.2020**
(21) Anmeldenummer: 16161637.0
(22) Anmeldetag: 22.03.2016
(51) Int. Cl.: H02P 3/22

(54) **STROMRICHTERANORDNUNG ZUM SICHEREN BREMSEN EINES ANTRIEBSSYSTEMS**
POWER CONVERTER ARRANGEMENT FOR SECURE BRAKING OF A DRIVE SYSTEM
SYSTÈME DE CONVERTISSEUR DE COURANT DESTINÉ AU FREINAGE FIABLE D'UN SYSTÈME D'ENTRAINEMENT

(43) Veröffentlichungstag der Anmeldung: 27.09.2017
(73) Patentinhaber: Siemens Aktiengesellschaft, 80333 München (DE)
(72) Erfinder: Beuermann, Max, 91052 Erlangen (DE)

(56) Entgegenhaltungen:
- EP-A1- 2 691 333
- EP-A2- 0 702 446
- WO-A1-03/071671
- WO-A1-2011/105959
- WO-A1-2015/113562
- CN-A- 103 241 606
- CN-A- 103 867 408
- DE-A1-102006 010 537
- DE-A1-102008 029 141
- DE-A1-102009 023 101
- DE-A1-102011 109 773
- DE-A1-102012 222 948
- US-A1- 2004 160 208

## Beschreibung

Die Erfindung betrifft eine Stromrichteranordnung mit einem netzseitigen Stromrichter, einem lastseitigen Stromrichter, einem Zwischenkreis und einem Bremswiderstand, wobei der netzseitige Stromrichter und der lastseitige Stromrichter über den Zwischenkreis gleichspannungsseitig miteinander verbunden sind, wobei der netzseitige Stromrichter als Diodengleichrichter ausgebildet ist. Die Erfindung betrifft weiter ein Antriebssystem mit einer solchen Stromrichteranordnung, wobei der netzseitige Stromrichter mit einem Energieversorgungsnetz verbunden ist und der lastseitige Stromrichter mit einer elektrischen Maschine elektrisch verbunden ist. Ferner betrifft die Erfindung eine Förderanlage mit mindestens einem solchen Antriebssystem, wobei die Förderanlage derart angeordnet ist, ein Fördergut von einer ersten Position zu einer zweiten Position zu transportieren. Die Erfindung betrifft weiter ein Verfahren zur Aufnahme von Energie durch eine solche Stromrichteranordnung sowie zum Bremsen eines solchen Antriebssystems oder einer solchen Förderanlage.

Stromrichteranordnungen werden eingesetzt, um elektrische Verbraucher, insbesondere elektrische Maschinen, und die daran angeschlossenen Verbraucher, die auch als Lasten bezeichnet werden, mit elektrischer Energie zu versorgen. Eine solche Stromrichteranordnung weist dabei einen netzseitigen Stromrichter, einen lastseitigen Stromrichter und einen Zwischenkreis auf. Der netzseitige und der lastseitige Stromrichter sind gleichspannungsseitig über den Zwischenkreis miteinander verbunden. Für rückspeisefähige Verbraucher, das heißt für Verbraucher, die sowohl Energie aus einem Energieversorgungsnetz aufnehmen wie auch an dieses abgeben können, hat es sich bewährt, eine rückspeisefähige Stromrichteranordnung zur Speicherung dieser Verbraucher vorzusehen. Diese rückspeisefähige Stromrichteranordnung weist sowohl netzseitig als auch lastseitig steuerbare Halbleiterschalter auf, so dass elektrische Energie über diese Stromrichteranordnung in beide Richtungen übertragen werden kann. Um die Kosten einer Stromrichteranordnung zu reduzieren, wird oftmals auf eine rückspeisefähige Eingangsschaltung verzichtet. Dabei weißt dann der netzseitige Stromrichter der Stromrichteranordnung anstelle der steuerbaren Halbleiterschalter nur eine Schaltung mit Dioden, auch als Diodengleichrichter bezeichnet, auf. Mit diesem Diodengleichrichter ist es nur möglich, Energie aus dem Energieversorgungsnetz in den Zwischenkreis zu übertragen. Eine Rückspeisung von Energie aus dem Zwischenkreis in das Energieversorgungsnetz ist mit dem Diodengleichrichter nicht möglich. Eine von dem rückspeisefähigen Verbraucher bereitgestellte Energie kann somit nicht in das Energieversorgungsnetz zurückgespeist werden. In vielen Anwendungen wird diese Energie mithilfe eines Bremswiderstandes in Wärme umgesetzt. Dazu wird der Bremswiderstand über einen Halbleiterschalter mit dem Zwischenkreis der Stromrichteranordnung verbunden. Die Kombination aus Schalter und Bremswiderstand wird auch als Bremssteller bezeichnet. Mithilfe des Halbleiterschalters kann die in Wärme umgesetzte Energie gesteuert bzw. geregelt werden. Alternativ kann die Bremsenergie auch in thermische Verluste des Motors umgewandelt werden. Entsprechende Verfahren sind unter dem Namen übersynchrones Bremsen bekannt.

Aus der DE 10 2012 222 948 A1 ist eine Schaltungsanordnung zum Stabilisieren eines Wechselrichters bekannt. Dazu wird eine Schaltungsanordnung und ein Verfahren zum Stabilisieren eines Wechselstromnetzes durch aktives Wechselrichten eines Wechselstroms des Wechselstromnetzes in einen Gleichstrom eines Zwischenkreises durch einen Netzwechselrichter, Erfassen einer Ist-Wirkleistung und einer Ist-Blindleistung eines Leistungsaustausches zwischen dem Netzwechselrichter und dem Wechselstromnetz sowie Gewinnen eines Schaltbefehls für den Netzwechselrichter in Abhängigkeit von einer Ist-Wirkleistung und einer Soll-Leerlaufnetzfrequenz sowie in Abhängigkeit von der Ist-Blindleistung und einer Soll-Leerlaufnetzspannung vorgeschlagen.

Aus der WO 2015/113562 A1 ist ein Antriebssystem für Fördereinrichtungen mit mindestens einem leistungsverzweigten Antriebsstrang und mehreren Antrieben bzw. Elektromotoren bekannt. Diese Elektromotoren sind über ein software-technisches elektronisches Synchronisationssystem gekoppelt, wobei die Leistungsverzweigung über eine Getriebestufe bzw. ein Planetengetriebe realisierbar ist.

Aus der WO 2011/105959 A1 ist ein Energieversorgungssystem für einen Aufzug bekannt. Dabei wird die Antriebsmaschine eines Lastenträgers von einer bodennahen Einheit mit Strom versorgt. Der Antrieb umfasst dabei einem Energiespeicher zur Speicherung von Energie. Darüber hinaus kann einem bodennahen Hauptstromnetz elektrische Energie entnommen werden. Ferner weist das Energieversorgungssystem einen Energieübertragungsbus auf, mit dem elektrische Energie zwischen der Antriebsmaschine, dem Energiespeichersystem und dem Hauptstromnetz übertragen werden kann. Weiter umfasst das Energieversorgungsystem eine Steuerung und ein Überwachungssystem zur Überwachung und Steuerung des Energieflusses zwischen dem Elektromotor, dem Energiespeicher und dem Hauptstromnetz.

Der Erfindung liegt die Aufgabe zugrunde, die Stromrichteranordnung zum Bremsen eines elektrischen Antriebs zu vereinfachen und zugleich ein sicheres und zuverlässiges Bremsen zu ermöglichen.

Die Aufgabe wird durch eine Förderanlage mit den Merkmalen des Anspruchs 1 gelöst. Die Aufgabe wird weiter durch ein Verfahren zum Bremsen einer solchen Förderanlage mit den Merkmalen des Anspruchs 4 gelöst.

Weitere vorteilhafte Ausgestaltungen der Erfindungen sind in den abhängigen Ansprüchen angegeben.

Der Erfindung liegt die Erkenntnis zugrunde, dass sich eine Stromrichteranordnung dadurch verbessern lässt, dass ein Bremswiderstand zur Umwandlung von kinetischer Energie, die an einer elektrischen Maschine beispielsweise in Form von Rotationsenergie vorliegt, über einen mechanischen Schalter, z.B. einen Leistungsschalter oder ein Vakuumschütz, mit dem Zwischenkreis verbunden ist. Damit können die Energie der elektrischen Maschine und die Energie der an der Maschine angekuppelten Last auf einfache Weise in Wärme umgewandelt werden. Ein rückspeisefähiger netzseitiger Stromrichter, der Energie aus dem Zwischenkreis in das Netz einspeisen kann, ist dafür nicht erforderlich. Ebenso kann auf eine verschleißbehaftete, mechanische Bremse an der elektrischen Maschine oder der Last verzichtet werden. Damit entfallen nicht nur Kosten für diese mechanische Bremse, sondern auch Kosten, die sich aus dem Verschleiß ergeben. Dazu zählt beispielsweise der Ersatz von Bremsklötzen und/oder Bremsscheiben, der mit der erfindungsgemäßen Stromrichteranordnung vermieden werden kann.

Durch den Einsatz eines mechanischen Schalters anstelle eines Halbleiterschalters kann der Aufbau der Stromrichteranordnung deutlich vereinfacht werden. Während ein Halbleiterschalter oftmals eine spezielle Ansteuereinheit zum Schalten des Halbleiterschalters erfordert, erfolgt die Ansteuerung des mechanischen Schalters über einfache Schaltkontakte. Darüber hinaus ist der mechanische Schalter weitaus unempfindlicher gegenüber Temperaturen, die im Schalter, beispielsweise aufgrund von Verlusten beim Fließen eines Stroms auftreten. Zum Schutz des Halbleiterschalters werden dazu oftmals aufwendige Temperaturüberwachungen vorgesehen, in denen die Temperatur des Halbleiters, wie beispielsweise die Sperrschichttemperatur, überwacht wird. Auf diese aufwendige und damit kostenintensive Überwachung kann verzichtet werden. Gerade bei einer hohen geforderten Verfügbarkeit der Bremse ist dies von Vorteil, da die Verfügbarkeit der Bremse nicht von der Temperatur des Halbleiterschalters abhängt. Bei Halbleiterschaltern wird daher oftmals eine Überdimensionierung bei dem Bremssteller vorgenommen. Auf diese teilweise recht teure Überdimensionierung kann bei Verwendung des mechanischen Schalters verzichtet werden.

Beim Bremsen der elektrischen Maschine durch Schließen des mechanischen Schalters zur Stillsetzung der Maschine ist es vorteilhaft, die Energiezufuhr des netzseitigen Stromrichters aus dem Energieversorgungsnetz zu unterbinden. Dies kann beispielsweise durch das Öffnen eines eingangsseitigen Leistungsschalters geschehen. Die Trennung vom Energieversorgungsnetz wird bei verschiedenen Anwendungen auch durch Kundenanforderungen oder Sicherheitsanforderungen ausdrücklich gefordert. Dabei arbeitet der lastseitige Stromrichter in diesem Fall, d.h. beim Bremsen, generatorisch weiter und hält durch die maschinenseitige Regelung den Fluss in der elektrischen Maschine und die Zwischenkreisspannung aufrecht. Die Zwischenkreisspannung kann hierbei jeden Wert größer oder gleich der aktuellen Motorklemmenspannung multipliziert mit dem Faktor 1,35 annehmen. Diese kann, muss aber nicht, mit absinkender Motordrehzahl reduziert werden. Daher kann die Bremsleistung in gewissen Bereichen eingestellt werden. Die Einstellung erfolgt durch die Wahl des Widerstandswertes des Bremswiderstands.

Die Trennung vom Energieversorgungsnetz kann auch dadurch erreicht werden, dass die Zwischenkreisspannung während des Bremsvorgangs einen so hohen Wert annimmt, dass die Dioden des Diodengleichrichters sperren. Auch diese Einstellung erfolgt durch die Wahl des Widerstandswertes des Bremswiderstands.

Somit kann bei dieser Stromrichteranordnung auf einen Halbleiterschalter zur elektrischen Verbindung des Bremswiderstands mit dem Zwischenkreis und seine Ansteuer- und Überwachungsschaltungen verzichtet werden. Diese Anordnung erfordert nur einen auf die gespeicherte Energie im rotierenden System abgestimmten Widerstand und einen mechanischen Schalter zur Schaffung einer elektrisch leitenden Verbindung zwischen Zwischenkreis und Bremswiderstand.

Darüber hinaus hat es sich als vorteilhaft erwiesen, dass der mechanische Schalter im spannungslosen Zustand geschlossen ist. Somit muss bei einer Spannungsunterbrechung lediglich der lastseitige Stromrichter noch mit Spannung versorgt werden, um auch bei der Spannungsunterbrechung die elektrische Maschine noch zuverlässig bis zum Stillstand abbremsen bzw. regeln zu können.

Es hat sich bei der Verwendung von Halbleiterschaltern gezeigt, dass die zum Schalten eines Bremswiderstands verwendeten Halbleiterschalter einer größeren Beanspruchung unterliegen als die Halbleiterschalter des lastseitigen Stromrichters. Dies ist zunächst nicht zu erwarten, da diese Halbleiterschalter am gleichen Zwischenkreis angeordnet sind und somit im geöffneten Zustand die gleiche Sperrspannung sperren müssen. Allerdings wirkt es sich positiv für die Halbleiterschalter des lastseitigen Stromrichters aus, dass diese regelmäßig, im Betrieb sogar mehrfach innerhalb einer Sekunde (Pulsweitenmodulation) in den leitenden Zustand übergehen. Der Halbleiterschalter des Bremswiderstands ist im Normalfall, in dem die elektrische Maschine Energie aus dem Zwischenkreis aufnimmt, im gesperrten, d.h. geöffneten Zustand. Damit liegt dauerhaft die Zwischenkreisspannung als Sperrspannung an dem Halbleiterschalter des Bremswiderstands an und bewirkt eine höhere Ausfallwahrscheinlichkeit, als es ansonsten statistisch zu erwarten wäre. Um die Verfügbarkeit der Stromrichteranordnung zu erhöhen hat es sich daher als sinnvoll erwiesen, den Halbleiterschalter des Bremswiderstands durch einen mechanischen Schalter zu ersetzen. Damit ist die Schaltungsanordnung gerade auch für den Einsatz von Asynchronmotoren besonders vorteilhaft, die bei einem Bremsvorgang noch die einwandfreie Funktion des lastseitigen Stromrichters erfordern, um einen Fluss in der Maschine zu erzeugen. Somit lässt sich insbesondere bei der Verwendung einer Asynchronmaschine als elektrische Maschine die Zuverlässigkeit der Stromrichteranordnung steigern, wenn der Halbleiterschalter des Bremswiderstands durch einen mechanischen Schalter ersetzt wird.

Bei einer Förderanlage, die ein Fördergut aus einer höher gelegenen Position in tiefer gelegene Orte transportiert, ist die Verfügbarkeit einer Bremse von hoher Bedeutung, da oftmals damit auch die Sicherheit der Anlage verbunden ist. Werden beispielsweise große Massen Material von einem Berg ins Tal transportiert, kann der Ausfall der Bremse dazu führen, dass diese Massen unkontrolliert in das Tal gelangen bzw. stürzen und dort zu hohem Schaden bei Mensch und Maschine führen. Große Massen sind insbesondere dann vorhanden, wenn das Trägheitsmoment an der Welle der elektrischen Maschine einen Wert von 5000 kgm² übersteigt. Daher ist insbesondere bei diesen Förderanlagen eine sichere Bremse für den sicheren Betrieb zwingend erforderlich.

Als besonders vorteilhaft hat es sich erwiesen, die Stromrichteranordnung für einen ortsfesten Antrieb zu verwenden. Im Gegensatz zu Traktionsantriebssystemen, wie beispielsweise in Fahrzeugen, Schiffen oder Schienenfahrzeugen treten Bremsvorgänge bei ortsfesten Antriebssystemen nur sehr selten auf. Zu ortsfesten Antriebssystemen zählen beispielsweise Windkraftanlagen oder Antriebe in der Prozessindustrie wie beispielsweise Antriebe für Verdichter sowie Antriebe für Förderanlagen wie beispielsweise Förderbänder. Es hat sich gezeigt, dass Halbleiterschalter einer hohen Belastung unterliegen, wenn diese für eine Zeitdauer von mehreren Stunden, Tagen oder sogar Wochen oder Monaten einer Sperrspannung ausgesetzt sind und nicht in den leitenden Zustand wechseln. Da für diese oben genannten Anwendung Bremsvorgänge sehr selten sind, unterliegen die Halbleiterschalter, die den Bremswiderstand mit dem Zwischenkreis verbinden, einer hohen Belastung und sind durch Ausfälle gekennzeichnet. Die Belastung wächst mit ansteigender Zwischenkreisspannung. Um jedoch einen hohen Energietransfer mit der Stromrichteranordnung realisieren zu können, wird die Zwischenkreisspannung möglichst hoch gewählt. Durch das Ersetzen eines Halbleiterschalters durch einen mechanischen Schalter kann die Wahrscheinlichkeit für einen Ausfall der Stromrichteranordnung teilweise sogar deutlich reduziert werden, da der mechanische Schalter vergleichsweise unempfindlich gegenüber einer hohen zu sperrenden Spannung ist. Somit kann die Belastung für die Stromrichteranordnung reduziert und ein störungsfreier Betrieb für die unterschiedlichen Betriebsmodi sichergestellt werden. Dieser Vorteil kommt insbesondere dann zum Tragen, wenn das Antriebssystem oder zumindest Teile des Antriebssystems in einer Höhe von über 2000 m über dem Meeresspiegel angeordnet sind, da dort die Höhenstrahlung zu einem erhöhten Ausfall des Halbleiters führt. Die Kombination aus hoher Sperrspannung, ohne Phasen, in denen der Halbleiter leitfähig wird und der Höhenstrahlung über 2000 m über dem Meeresspiegel führt zu einer hohen Ausfallrate bei Stromrichteranordnungen mit einem Halbleiter im Bremssteller. Diese Ausfallrate kann durch die Verwendung der mechanischen Schalters anstelle des Halbleiters im Bremssteller verringert werden, so dass die Zuverlässigkeit der Stromrichteranordnung deutlich gesteigert wird.

Unter einer ortsfesten Anordnung im Sinne eines hier dargestellten Antriebssystems wird ein Antriebssystem verstanden, das nicht dazu ausgerichtet ist, ein Fahrzeug in eine Bewegung, insbesondere eine translatorische Bewegung, zu versetzen. Unter dem ortsfesten Antriebssystem wird eine Anordnung verstanden, die über eine längere Zeit an einem Ort eine Aufgabe/Funktion erfüllt. Dabei kann das ortsfeste Antriebssystem insbesondere aufgrund seiner Abmessungen und seines Gewichts geeignet sein, seine Position eventuell unter Einsatz weiterer Hilfsmittel wie beispielsweise einem Kran oder einem Transportfahrzeug, veränderbar zu gestalten, indem es zu unterschiedlichen Einsatzorten transportierbar ist.

Die Stromrichteranordnung ist im Besonderen dazu geeignet, in einer Höhe von über 2000 m über dem Meeresspiegel angeordnet zu werden. Es hat sich gezeigt, dass über einer Höhe von 2000 m die Höhenstrahlung zunimmt. Durch die Höhenstrahlung wird ein Halbleiterschalter starker Beanspruchung ausgesetzt, so dass er schneller ausfällt bzw. ein Ausfall wahrscheinlicher wird. Dieser Effekt verstärkt sich dadurch, wenn der Halbleiterschalter dauerhaft eine hohe Spannung sperren muss, ohne in den leitenden Zustand zu wechseln. Insbesondere wenn der Halbleiter über mehrere Stunden oder Tage nicht in den leitenden Zustand wechselt, also im sperrenden Zustand verharrt, treten Ausfälle besonders häufig dann auf, wenn die Stromrichteranordnung in einer Höhe von über 2000 m erhöhter Höhenstrahlung ausgesetzt ist. Gerade dieser Zustand ist jedoch für den Schalter, der den Bremswiderstand mit dem Zwischenkreis verbindet, charakteristisch. Daher hat es sich für den Einsatz in einer Höhe von mehr als 2000 m über dem Meeresspiegel als besonders sinnvoll erwiesen, den Halbleiterschalter des Bremsstellers durch einen mechanischen Schalter zu ersetzen und somit die Zuverlässigkeit des Systems deutlich zu erhöhen.

Der mechanische Schalter ist dabei als Wechselstromschalter ausgebildet. Wechselstromschalter haben im Gegensatz zu Gleichstromschalter die Eigenschaft, keinen Gleichstrom abschalten zu können. Wechselstromschalter benötigen für einen Abschaltvorgang einen Stromnulldurchgang, in dem ein besonders einfaches und verlustarmes Schalten möglich ist. Dadurch ist ein Gleichstromschalter deutlich teurer, größer und schwerer als ein Wechselstromschalter, da er einen vorhandenen Strom löschen, d.h. zu Null bringen, muss. Daher hat man bei der Realisierung eines Bremsstellers mit einem Halbleiterschalter einen Halbleiter eingesetzt, der einen Strom nicht nur Einschalten, sondern auch abschalten kann. Zu der Gruppe dieser Schalter gehören beispielsweise IGBT, GTO, IGCT, MOSFET, und Transistoren. Auf den Einsatz von Thyristoren zur Verbindung des Bremswiderstands mit dem Zwischenkreis wurde verzichtet, da dieser einen Strom zwar einschalten, aber nicht abschalten kann. Der Stromfluss bleibt bei einem Thyristor bis zum nächsten Nulldurchgang bestehen.

Durch die geeignete Wahl der Größe des Widerstandswertes kann auch bei der Verwendung eines Wechselstromschalters sichergestellt werden, dass die entstehende Bremsenergie durch den Bremswiderstand während des Bremsvorgangs vollständig oder zumindest nahezu vollständig in Wärme umgewandelt werden kann und gleichzeitig der Kondensator im Zwischenkreis nicht zu schnell entladen wird. Mit einem zu schnellen Entladen des Kondensators im Zwischenkreis würden auch die durch den lastseitigen Stromrichter erzeugbaren Spannungen an den Motorklemmen reduziert werden. Damit würden der Fluss in der elektrischen Maschine und damit auch das Kippmoment der Maschine sinken. Somit wird der Wert des Widerstands derart klein gewählt, dass die Bremsenergie in Wärme umsetzbar ist und derart groß gewählt, dass der Kondensator nicht bereits entladen ist, bevor die elektrische Maschine zum Stillstand gekommen ist. In diesem Fall kann auf den Einsatz eines Gleichstromschalters verzichtet werden, um besonders kostengünstig und kompakt das Schaltelement für den Bremswiderstand zu realisieren.

Weiter ist der mechanische Schalter mehrpolig, insbesondere zweipolig, ausgebildet. Zur Erhöhung der Sicherheit hat es sich als vorteilhaft erwiesen, den Bremswiderstand im Betrieb der Stromrichteranordnung komplett elektrisch von der Stromrichteanordnung und seinen vorhandenen elektrischen Potentialen isolieren zu können. Somit ist dieser für Wartungsarbeiten auch während des Betriebs der Stromrichteranordnung zugänglich. Darüber hinaus ist der Bremssteller auch noch dann betriebsbereit, falls einer der Kontakte derart defekt ist, dass er dauerhaft eine Verbindung herstellt. Dieser Fehler wird auch als Kleben eines Kontaktes bezeichnet.

Des Weiteren weist die Stromrichteranordnung parallel zum Zwischenkreis eine Reihenschaltung aus einem weiteren Bremswiderstand und einem Halbleiterschalter auf. Mit diesem Ausbau kann die Stromrichteranordnung mit einem mechanischen Schalter derart verbessert werden, dass durch den weiteren Bremswiderstand und dem damit verbundenen Halbleiterschalter das Bremsverhalten in bestimmten Bereichen beeinflusst werden kann. Somit kann der Bremsvorgang beispielsweise in Bezug auf die auftretenden Momente oder in Bezug auf die Dauer des Bremsvorgangs beeinflusst werden. Dabei müssen weder der Halbleiterschalter noch der Bremswiderstand auf die maximale Bremsenergie ausgelegt werden, sondern können kleiner dimensioniert werden. Die Sicherheit der Stromrichteranordnung bleibt davon unberührt, da auch ein Ausfall des Halbleiterschalters, gegebenenfalls unter Einsatz einer Sicherung, nicht das Bremsvermögen der Stromrichteranordnung auf ein unzulässiges Maß verändert.

Bei einer vorteilhaften Ausgestaltung weist die elektrische Maschine an ihrer Welle mit einer mechanisch verbundenen Last ein Trägheitsmoment von mindestens 5000 kg·m² auf. Entsprechende große Massen sind mit Hilfe von mechanischen Bremsen nur schwer handhabbar. Diese mechanische Bremse würde ein so großes Gewicht haben, dass dadurch die Dynamik der Anlage beeinträchtigt würde. Üblicherweise werden derart große mechanische Lasten über mechanische Bremsen gebremst, die nur eine geringe Anzahl von Lebenszyklen haben. Mit ihnen sind oftmals nur 5 oder 10 Bremsungen möglich bis sie ihre Verschleißgrenze erreicht haben und ausgetauscht werden müssen. Darüber hinaus erfordert diese mechanische Bremse einen hohen Platzbedarf. Des Weiteren müssen die entstehenden Temperaturen sicher an die Umgebung abgeführt werden können ohne für andere Komponenten, wie beispielsweise Sensoren, Regelungs- oder Überwachungseinrichtungen, eine unzulässige Erwärmung darzustellen. Daher hat es sich als besonders günstig erwiesen, diese relativ hohen Bremsenergien mit Hilfe eines Bremswiderstands und einem mechanischen Schalter abzuführen. Ein weiterer Vorteil für den Einsatz des mechanischen Schalters besteht darin, dass dieser zum einen, im Gegensatz zu einem Halbleiterschalter, für hohe Leistungen nahezu keine elektrischen Verluste aufweist und in Bezug auf den fließenden Strom kurzzeitig, so lange keine Schalthandlungen erfolgen, überlastbar ist, ohne Beschädigungen davonzutragen.

Im Folgenden wird die Erfindung anhand der in den Figuren dargestellten Ausführungsbeispiele näher beschrieben und erläutert. Es zeigen:
- FIG 1 und FIG 2: jeweils ein Ausführungsbeispiel eines Antriebssystems mit einem mechanischen Schalter und
- FIG 3: eine Förderanlage.

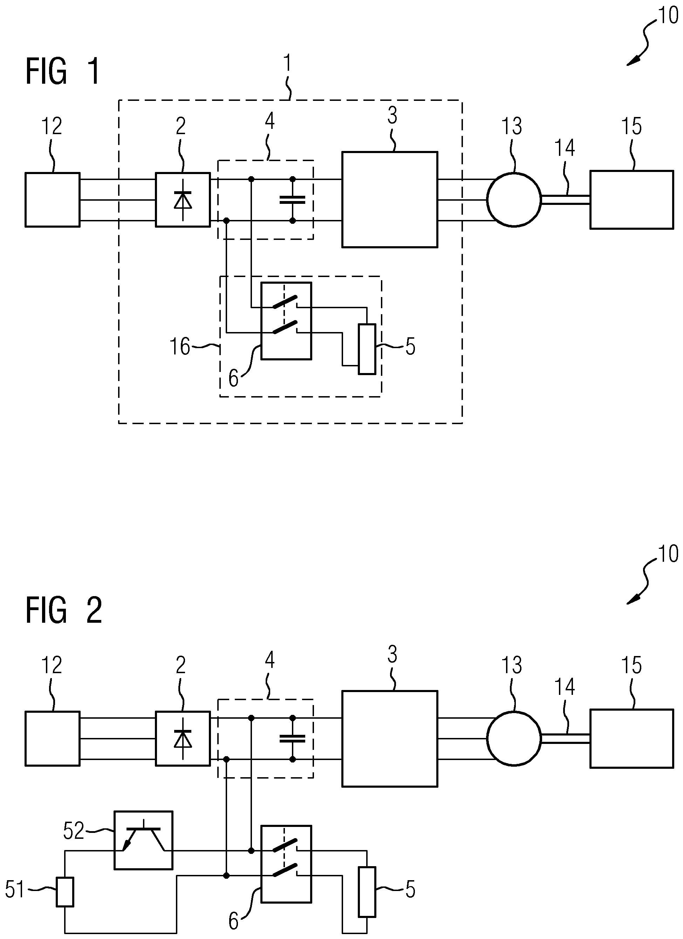

FIG 1 zeigt ein Antriebssystem 10 mit einer Stromrichteranordnung 1, die mit einem Energieversorgungsnetz 12 und einer elektrische Maschine 13 verbunden ist. Die elektrische Maschine 13, vorzugsweise als Asynchronmaschine ausgeführt, ist über eine Welle 14 mit einer Last 15 mechanisch verbunden. Die Stromrichteranordnung 1 weist einen netzseitigen Stromrichter 2 und einen lastseitigen Stromrichter 3 auf, die über einen Zwischenkreis 4 gleichspannungsseitig miteinander verbunden sind. Das Symbol der Diode am netzseitigen Stromrichter 2 gibt an, dass es sich bei diesem netzseitigen Stromrichter 2 um eine Diodenbrücke handelt, die nicht rückspeisefähig ist. An dem Zwischenkreis 4 ist darüber hinaus parallel zu den Stromrichtern 2,3 ein Bremssteller 16 angeordnet. Der Bremssteller 16, weist einen Bremswiderstand 5 und einen mechanischen Schalter 6 auf, der den Bremswiderstand 5 vom Zwischenkreis 4 trennen oder mit diesem elektrisch verbinden kann.

In diesem Ausführungsbeispiel ist der mechanische Schalter 6 als zweipoliger Schalter ausgeführt. Dies ist nicht zwingend erforderlich, ermöglicht aber neben dem Schalten eines Stroms durch den Bremswiderstand 5 auch die Isolierung des Bremswiderstands 5 von den Potentialen des Zwischenkreises 4.

Während des Betriebs der Last 15 nimmt diese Energie über die Stromrichteranordnung 1 aus dem Energieversorgungsnetz 12 auf. Der Energiefluss erfolgt dabei von Energieversorgungsnetz 12 zur Last 15. Für den Fall, dass die Last 15 Energie zurückspeist, wie beispielsweise während eines Bremsvorgangs der Last 15, dreht sich die Energieflussrichtung um. Da der netzseitige Stromrichter 2 als Diodengleichrichter nicht rückspeisefähig ist, kann ein Energiefluss vom Zwischenkreis 4 in das Energieversorgungsnetz 12 nicht erfolgen. Damit die in den Zwischenkreis 4 eingespeiste Energie nicht zu einer Spannungsüberhöhung, insbesondere einer unzulässigen Spannungsüberhöhung, am Kondensator des Zwischenkreises 4 führt, ist ein Bremssteller 16 mit dem Zwischenkreis 4 verbunden. Über einen mechanischen Schalter 6 kann der Bremswiderstand 5 mit dem Zwischenkreis 4 elektrisch verbunden werden, so dass die von der elektrischen Maschine 13 in den Zwischenkreis 4 eingespeiste Energie mit Hilfe des Bremswiderstands 5 in Wärme umgewandelt werden kann. Dadurch wird ein Spannungsanstieg im Zwischenkreis 4 verhindert oder zumindest auf zulässige Werte begrenzt.

In FIG 2 ist parallel zu der Kombination aus mechanischem Schalter 6 und Bremswiderstand 5 eine Reihenschaltung, aufweisend einen weiteren Bremswiderstand 51 und einen Halbleiterschalter 52, angeordnet. Mit dieser Anordnung ist es möglich, die Energieumwandlung in Wärme und damit den Bremsvorgang durch Schalthandlungen am Halbleiterschalter 52 zu beeinflussen. Dabei wird der Großteil der Bremsenergie dem Bremswiderstand 5 über den mechanischen Schalter 6 zugeführt, da dieser weniger empfindlich gegenüber großen Strömen ist. Ein weiterer Anteil kann gesteuert oder geregelt über den Halbleiterschalter 52 und den weiteren Bremswiderstand 51 in Wärme umgewandelt werden. Damit kann Einfluss auf die Zwischenkreisspannung genommen werden, um den Bremsvorgang zu optimieren.

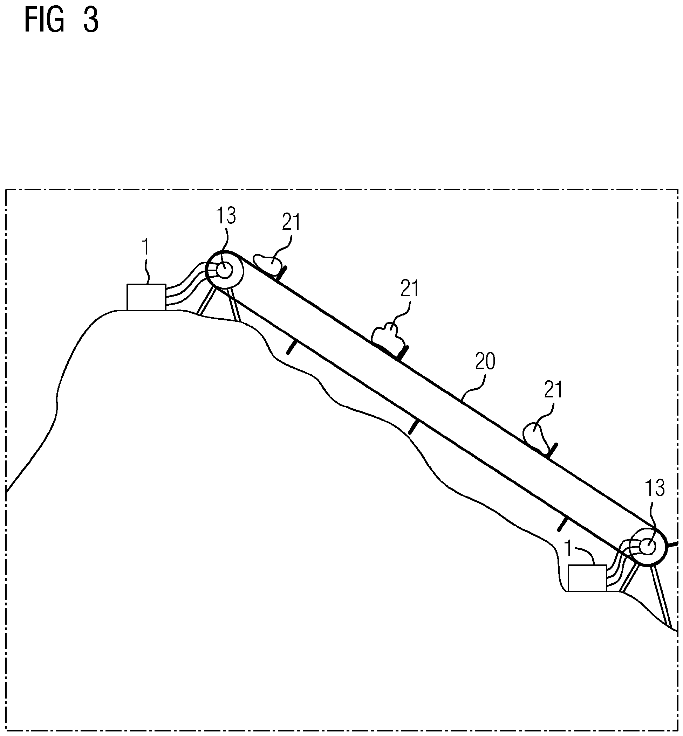

FIG 3 zweigt eine Förderanlage 20 zum Transport eines Fördergutes 21 von einem Berg in ein Tal, wobei während des Transports die potentielle Energie des Fördergutes 21 abnimmt. Mit der Abnahme der potentiellen Energie muss das Antriebssystem 1, welches die Förderanlage 20 speist, diese Energie aufnehmen. Diese Aufnahme an Energie muss zuverlässig und sicher erfolgen, da ein unkontrolliertes Hinabstürzen des Fördergutes 21 zu Schäden bei Mensch und Anlage führen kann. Diese Schäden fallen umso größer aus je größer die transportierte Last ist. Insbesondere bei Lasten, die ein Trägheitsmoment von mehr als 5000 kgm² ist mit sehr großem Schaden zu rechnen. Um die Anlage möglichst kostengünstig aufzubauen und da oftmals in entlegenen Orten wie einem Berg oder einem Teil keine Energieaufnahme durch das hier nicht dargestellte Energieversorgungsnetz 12 möglich ist, werden die Stromrichteranordnungen zumeist mit Diodenbrücken als netzseitige Stromrichter ausgeführt. Damit kann ein in den Figuren 1 oder 2 dargestelltes Antriebssystem 10 zur Speisung der Förderanlage 20 verwendet werden. Dabei kann die Förderanlage durch eine Stromrichteranordnung 1 gespeist werden, die am Berg, im Tal oder dazwischen angeordnet ist. Dargestellt ist der Betrieb einer Förderanlage mit zwei Stromrichteranordnungen 1, von denen jeweils eine am Berg und eine im Tal angeordnet sind. Es ist aber auch möglich, beliebig viele Stromrichteranordnungen 1 an beliebige Stellen der Förderanlage 20 anzuordnen. Besonders günstig ist es, ein in den Figuren 1 oder 2 dargestelltes Antriebssystem 10 mit einer Stromrichteranordnung 1 am Berg anzuordnen, wenn diese Anordnung in einer Höhe oberhalb von 2000 m über dem Meeresspiegel erfolgt. Bei dieser Höhe kann die Zuverlässigkeit des Stromrichteranordnung 1 dadurch deutlich gesteigert werden, da der mechanische Schalter unempfindlich gegenüber Höhenstrahlung ist.

Obwohl die Erfindung im Detail durch die bevorzugten Ausführungsbeispiele näher illustriert und beschrieben wurde, ist die Erfindung nicht allein auf das offenbarte Beispiel beschränkt und andere Variationen können vom Fachmann hieraus abgeleitet werden, ohne den Schutzumfang der Erfindung zu verlassen.

Zusammenfassend betrifft die Erfindung eine Stromrichteranordnung mit einem netzseitigen Stromrichter, einem lastseitigen Stromrichter, einem Zwischenkreis und einem Bremswiderstand, wobei der netzseitige Stromrichter und der lastseitige Stromrichter über den Zwischenkreis gleichspannungsseitig miteinander verbunden sind, wobei der netzseitige Stromrichter als Diodengleichrichter ausgebildet ist. Zur Vereinfachung der Stromrichteranordnung zum Bremsen eines Antriebs und zur zuverlässigen und sicheren Durchführung eines Bremsvorgangs wird vorgeschlagen, dass der Bremswiderstand mittels eines mechanischen Schalters mit dem Zwischenkreis elektrisch verbunden ist. Darüber hinaus betrifft die Erfindung ein Antriebssystem mit einer solchen Stromrichteranordnung, wobei der netzseitige Stromrichter mit einem Energieversorgungsnetz verbunden ist und der lastseitige Stromrichter mit einer elektrischen Maschine verbunden ist und wobei die elektrische Maschine als Asynchronmaschine ausgebildet ist.

## Patentansprüche

1. Förderanlage (20) mit mindestens einer Stromrichteranordnung (1), wobei die Stromrichteranordnung (1)
- einen netzseitigen Stromrichter (2),
- einen lastseitigen Stromrichter (3),
- einen Zwischenkreis (4) und
- einen Bremswiderstand (5) aufweist,
wobei der netzseitige Stromrichter (2) und der lastseitige Stromrichter (3) über den Zwischenkreis (4) gleichspannungsseitig miteinander verbunden sind, wobei der netzseitige Stromrichter (2) als Diodengleichrichter ausgebildet ist, wobei der Bremswiderstand (5) mittels eines mechanischen Schalters (6) mit dem Zwischenkreis (4) elektrisch verbunden ist, wobei der netzseitige Stromrichter (2) mit einem Energieversorgungsnetz (12) verbunden ist und der lastseitige Stromrichter (3) mit einer elektrischen Maschine (13) verbunden ist und wobei die elektrische Maschine (13) als Asynchronmaschine ausgebildet ist, wobei die Förderanlage (20) derart angeordnet ist, ein Fördergut (21) von einer ersten Position zu einer zweiten Position zu transportieren, wobei das Fördergut (21) in der ersten Position eine höhere potentielle Energie aufweist als in der zweiten Position, wobei der mechanische Schalter (6) als mehrpoliger, insbesondere zweipoliger, Wechselstromschalter ausgebildet ist, wobei die Stromrichteranordnung (1) parallel zum Zwischenkreis (4) eine Reihenschaltung aus einem weiteren Bremswiderstand (51) und einem Halbleiterschalter (52) aufweist.

2. Förderanlage (20) nach Anspruch 1, wobei die elektrische Maschine (13) an ihrer Welle (14) mit einer mechanisch verbundenen Last (15) ein Trägheitsmoment von mindestens 5000 kg·m² aufweist.

3. Förderanlage (20) nach einem der Ansprüche 1 oder 2, wobei die Stromrichteranordnung (1) in einer Höhe von über 2000 m über dem Meeresspiegel angeordnet ist.

4. Verfahren zum Bremsen einer Förderanlage (20) nach einem der Ansprüche 1 bis 3, wobei zum Bremsen der elektrischen Maschine (13) eine elektrische Verbindung zum Energieversorgungsnetz (12) unterbrochen wird, wobei der mechanische Schalter (6) geschlossen wird und bis zum Stillstand der elektrischen Maschine (13) im geschlossenen Zustand bleibt, so dass der Bremswiderstand (5) bis zum Stillstand mit dem Zwischenkreis (4) elektrisch leitend verbunden ist, wobei mittels des weiteren Bremswiderstands (51) und des damit verbundenen Halbleiterschalters (52) die auftretenden Momente beeinflusst werden.

## Claims

1. Conveyor system (20) with at least one power converter arrangement (1), wherein the power converter arrangement (1) has
- a network-side power converter (2),
- a load-side power converter (3),
- an intermediate circuit (4) and
- a brake resistor (5),
wherein the network-side power converter (2) and the load-side power converter (3) are connected to one another on the DC side by way of the intermediate circuit (4), wherein the network-side power converter (2) is embodied as a diode rectifier, wherein the brake resistor (5) is connected electrically to the intermediate circuit (4) by means of a mechanical switch (6), wherein the network-side power converter (2) is connected to a power supply network (12) and the load-side power converter (3) is connected to an electric machine (13) and wherein the electric machine (13) is embodied as an asynchronous machine, wherein the conveyor system (20) is arranged so as to transport a conveyor belt (21) from a first position to a second position, wherein the conveyor belt (21) has a higher potential energy in the first position than in the second position, wherein the mechanical switch (6) is embodied as a multi-pole, in particular dual-pole, alternating current switch, wherein the power converter arrangement (1) has a series circuit comprising a further brake resistor (51) and a semiconductor switch (52) parallel to the intermediate circuit (4).

2. Conveyor system (20) according to claim 1, wherein the electric machine (13) has a torque of inertia of at least 5000 kg·m² on its shaft (14) with a mechanically connected load (15).

3. Conveyor system (20) according to one of claims 1 or 2, wherein the power converter arrangement (1) is arranged at a height of above 2000 m above sea level.

4. Method for braking a conveyor system (20) according to one of claims 1 to 3, wherein in order to brake the electric machine (13), an electric connection to the power supply network (12) is interrupted, wherein the mechanical switch (6) is closed and remains in the closed state until the electric machine (13) comes to a standstill, so that the brake resistance (5) is connected in an electrically conducting manner to the intermediate circuit (4) until it is at a standstill, wherein the occurring torques are influenced by means of the further brake resistance (51) and the semiconductor switch (52) connected thereto.

## Revendications

1. Installation (20) de transport ayant au moins un système (1) de convertisseur de courant, le système (1) de convertisseur de courant ayant
- un convertisseur (2) de courant du côté du réseau,
- un convertisseur (3) de courant du côté de la charge,
- un circuit (4) intermédiaire et
- une résistance (5) de freinage,
dans laquelle le convertisseur (2) de courant du côté du réseau et le convertisseur (3) de courant du côté de la charge sont connectés l'un à l'autre du côté de la tension continue par le circuit (4) intermédiaire, le convertisseur (2) de courant du côté du réseau étant constitué sous la forme d'un redresseur à diode, la résistance (5) de freinage étant connectée électriquement au circuit (4) intermédiaire au moyen d'un interrupteur (6) mécanique, le convertisseur (2) de courant du côté du réseau étant connecté à un réseau (12) d'alimentation en énergie et le convertisseur (3) de courant du côté de la charge étant connecté à une machine (13) électrique et la machine (13) électrique étant constituée sous la forme d'une machine asynchrone, l'installation (20) de transport étant disposée de manière à transporter un produit (21) à transporter d'une première position à une deuxième position, le produit (21) à transporter ayant, dans la première position, une énergie potentielle plus grande que dans la deuxième position, l'interrupteur (6) mécanique étant constitué sous la forme d'un interrupteur de courant alternatif multipolaire, notamment bipolaire, le système (1) de convertisseur de courant ayant, en parallèle au circuit (4) intermédiaire, un circuit série composé d'une autre résistance (51) de freinage et d'un interrupteur (52) à semi-conducteur.

2. Installation (20) de transport suivant la revendication 1, dans laquelle la machine (13) électrique a, sur son arbre (14), avec une charge (15) reliée mécaniquement, un moment d'inertie d'au moins 5000 kg·m².

3. Installation (20) de transport suivant l'une des revendications 1 ou 2, dans laquelle le système (1) de convertisseur de courant est disposé à un niveau de plus de 2000 m au-dessus du niveau de la mer.

4. Procédé de freinage d'une installation (20) de transport suivant l'une des revendications 1 à 3, dans lequel, pour freiner la machine (13) électrique, on interrompt une liaison électrique au réseau (12) d'alimentation en énergie, dans lequel on ferme l'interrupteur (6) mécanique et, jusqu'à l'arrêt de la machine (13) électrique, il reste à l'état fermé, de manière à relier, d'une manière conductrice de l'électricité, la résistance (5) de freinage au circuit (4) intermédiaire jusqu'à l'arrêt, dans lequel, au moyen de l'autre résistance (51) de freinage et de l'interrupteur (52) à semi-conducteur ainsi relié, on influence les couples, qui se produisent.
